# EUROPEAN PATENT SPECIFICATION

(11) **EP 4 282 761 B1**
(45) Date of publication and mention of the grant of the patent: **01.10.2025**
(21) Application number: 23174916.9
(22) Date of filing: 23.05.2023
(51) Int. Cl.: B64D 13/06, F25B 1/053

(54) **VAPOR COMPRESSION SYSTEM FOR AEROSPACE APPLICATIONS**
DAMPFKOMPRESSIONSSYSTEM FÜR LUFT- UND RAUMFAHRTANWENDUNGEN
SYSTÈME DE COMPRESSION DE VAPEUR POUR APPLICATIONS AÉROSPATIALES

(30) Priority: 23.05.2022 US 202217751077
(43) Date of publication of application: 29.11.2023
(73) Proprietor: Hamilton Sundstrand Corporation, Charlotte, NC 28217-4578 (US)
(72) Inventor: COUTIN, Aiden, Ogden, UT, 84403 (US)
(74) Representative: Dehns

(56) References cited:
- US-A1- 2010 083 678
- US-A1- 2014 366 563
- US-A1- 2020 407 072

## Description

### BACKGROUND

Exemplary embodiments pertain to an environmental control system of an aircraft, and more particularly, to a vapor compression system thermally coupled to an environmental control system.

A typical commercial aircraft includes at least several nonintegrated cooling systems configured to provide temperature control to various regions of the aircraft. For example, an aircraft environmental control system primarily provides heating and cooling for the aircraft cabin area. In addition, a galley chiller system is dedicated to refrigerating the food carts in the galleys located throughout the aircraft. Since each system has a significant weight and power requirement, the overall efficiency of the aircraft is affected by these nonintegrated systems. A fluid cooling system for an aircraft comprising a compressor, a turbine, an evaporator and a condenser in a closed loop is disclosed in US 2014/366563 A1.

### BRIEF DESCRIPTION

According to an aspect, a fluid cooling system of an aircraft is provided as defined in claim 1.

In embodiments the cooling medium is refrigerant.

In embodiments the at least one parameter is at least one of a phase, pressure, and temperature of the cooling medium at the outlet of the turbine.

In embodiments comprising a shaft operably coupling the turbine and the compressor. Work extracted from the cooling medium within the turbine rotates the shaft to power the compressor.

In embodiments comprising a motor operably coupled to the compressor.

In embodiments comprising a generator operably coupled to the compressor by a shaft, wherein work extracted from the cooling medium within the turbine generates electric power at the generator.

### BRIEF DESCRIPTION OF THE DRAWINGS

The following descriptions should not be considered limiting in any way. With reference to the accompanying drawings, like elements are numbered alike:
FIG. 1 is a schematic diagram of an environmental control system of an aircraft not according to the claims;
FIG. 2 is a schematic diagram of a fluid cooling system thermally coupled to an environmental control system of an aircraft not according to the claims;
FIG. 3 is a schematic diagram of a fluid cooling system thermally coupled to an environmental control system of an aircraft according to an embodiment; and
FIG. 4 is a schematic diagram of a fluid cooling system thermally coupled to an environmental control system of an aircraft not according to the claims.

### DETAILED DESCRIPTION

A detailed description of one or more embodiments of the disclosed apparatus and method are presented herein by way of exemplification and not limitation with reference to the Figures.

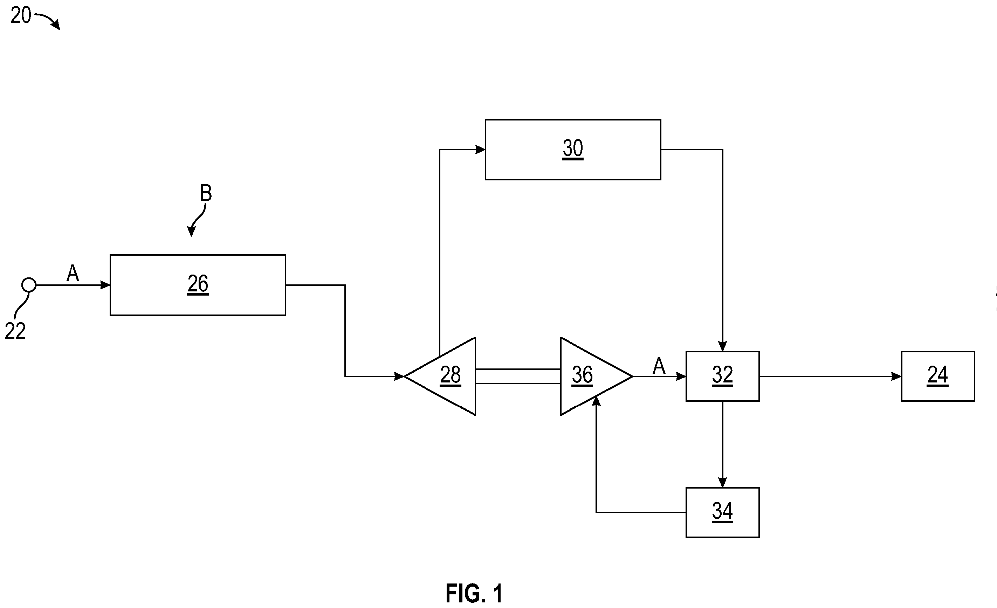

With reference now to the FIG. 1, an example of a schematic diagram of a portion of an environment control system (ECS) 20, such as an air conditioning unit or pack for example, is depicted not according to the claims. As shown, the ECS 20 may be configured to receive a medium A at an inlet 22 and provide a conditioned form of the medium A to one or more loads 24. In embodiments where the ECS 20 is used in an aircraft application, the medium A1 may be bleed air, which is pressurized air originating from, i.e. being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn. However, arrangements where the medium A is alternatively or additionally provided from another source are also contemplated. For example, the medium A may be fresh or ambient air such as procured via one or more scooping mechanisms and/or may be cabin air provided from a volume of the aircraft, such as the cabin.

As shown, the medium A may be cooled within a precooler or a first heat exchanger 26 prior to being delivered to a compressor 28. A compressor, such as compressor 28 is a mechanical device configured to raise a pressure of a medium and can be driven by another mechanical device (e.g., a motor or a medium via a turbine). Examples of compressor types include centrifugal, diagonal or mixed-flow, axialflow, reciprocating, ionic liquid piston, rotary screw, rotary vane, scroll, diaphragm, air bubble, etc. Within the compressor 28, the temperature and pressure of the medium A are increased. From the outlet of the compressor 28, the medium A flows to a second heat exchanger 30, within which the medium A is cooled. The compressed medium A output from the second heat exchanger 30 may then be provided to a condenser 32 and to a water extractor 34 in series, to condense and to remove the moisture therefrom, respectively.

From the water extractor 34, the warm, dry medium A is provided to an inlet of a turbine 36. A turbine, such as turbine 36 for example, is a mechanical device that expands a medium and extracts work therefrom (also referred to as extracting energy). Within the turbine 36, the medium A is expanded and work is extracted therefrom and results in a cooling and depressurization of the medium A. The further cooled, reduced pressure medium A output from the turbine 36 may then be provided as a secondary flow to the condenser 32. As the secondary flow, heat is transferred to the medium A is prior to being delivered to one or more loads 24 of the aircraft, such as the cabin or cockpit for example. It should be understood that the ECS 20 illustrated and described herein is intended as an example only and that an ECS 20 having any suitable configuration is within the scope of the disclosure. Further, an ECS 20 configured to receive a plurality of mediums and deliver a conditioned form of one or more of those mediums to a load is also contemplated herein.

The medium A is cooled by a secondary or cooling medium B within at least one heat exchanger of the ECS 20, such as the first heat exchanger 26 or the second heat exchanger 30 for example. Unlike existing ECS 20 which typically use a flow of ram air as the secondary medium, in an embodiment, the cooling medium B is the fluid of a fluid cooling system, such as a closed loop vapor compression system for example. In such embodiments, the vapor compression system is thermally coupled to the environmental control system 20 at the at least one heat exchanger.

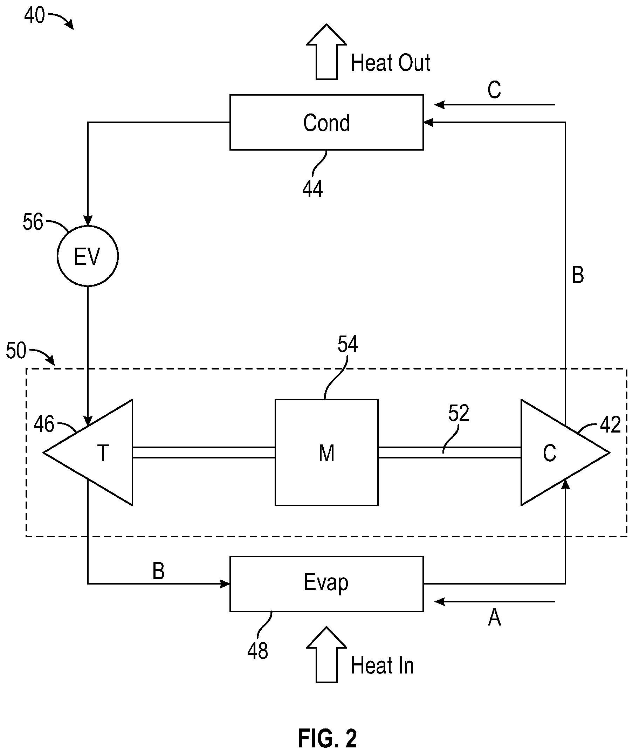

With reference now to FIGS. 2-4, variants of the fluid cooling system 40 are illustrated. In each of FIGS. 2-4, the fluid cooling system 40 includes a compressor 42, a condenser 44 or heat rejection heat exchanger, a turbine 46, and an evaporator 48 or heat absorption heat exchanger arranged to form a closed fluid loop. The cooling medium B, such as a refrigerant, for example, is configured to flow from the compressor 42 to the condenser 44, turbine 46, and evaporator 48 in series.

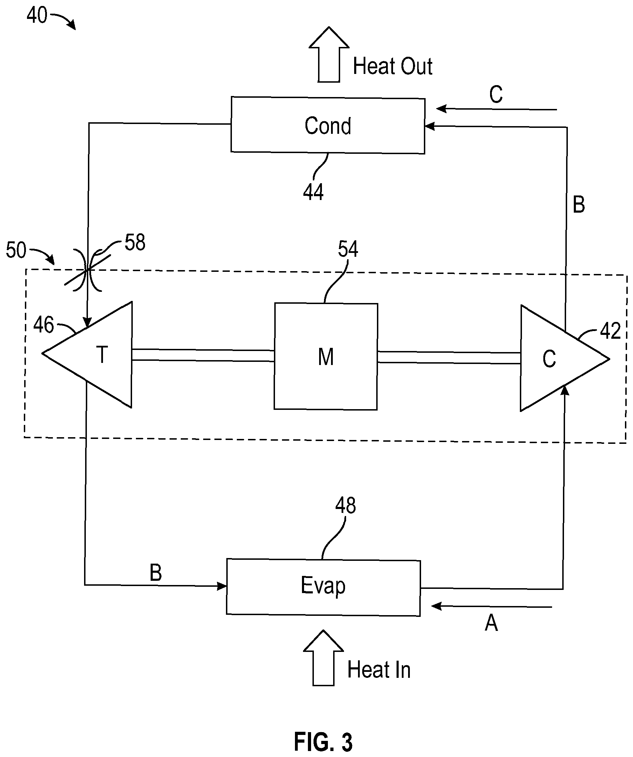

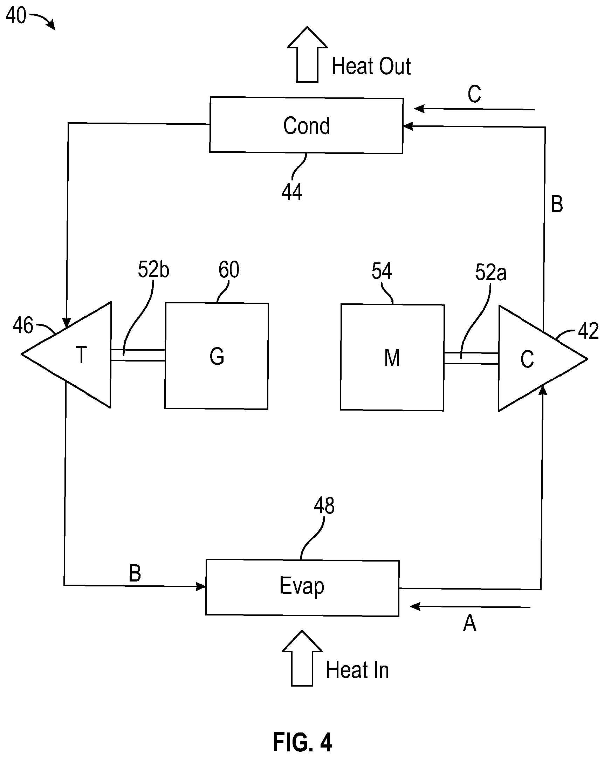

In a fluid cooling system, best shown in FIGS. 2 and 3, the compressor 42 and the turbine 46 are part of a compression device 50. A compression device 50 is a mechanical device that includes components for performing thermodynamic work on a medium (e.g., extracts work from or applies work to cooling medium B by raising and/or lowering pressure and by raising and/or lowering temperature). Examples of a compression device 50 include an air cycle machine. In such embodiments, the compressor 42 and the turbine 46 are operably coupled to one another by a shaft 52. However, in other embodiments, such as shown in FIG. 4 and will be described in more detail below, the compressor 42 and the turbine 46 may be mechanically separate from one another.

In embodiments where the turbine 46 is operably coupled to the compressor 42 via the shaft 52, the work extracted from the cooling medium B within the turbine 46 is configured to drive the compressor 42 via the shaft 52. In some embodiments, the power extracted from the cooling medium B within the turbine 46 is insufficient to power the compressor 42. Accordingly, a motor 54 may be operably coupled to the shaft 52 and used in individually or in combination with the turbine 46 to produce work that the compressor 42 uses to compress the cooling medium B.

With reference to FIG. 2 which shows a cooling system not according to the claims, an expansion device 56 is located along the fluid flow path downstream of the compressor 42 and upstream of the evaporator 48. As shown, the expansion device 56 may be located at a position along the fluid loop between the condenser 44 and the evaporator 48, such as downstream from the condenser 44 and upstream from the turbine 46. Accordingly, an inlet of the expansion device 56 is fluidly coupled to an outlet of the condenser 44 and an outlet of the expansion device 56 is fluidly coupled to an inlet of the turbine 46.

During operation of the fluid cooling system 40, a hot vaporized cooling medium B output from the compressor 42 is provided to the condenser 44. Within the condenser 44, the cooling medium B is arranged in a heat exchange relationship with another medium C. In an embodiment, the another medium C is ram air; however, it should be understood that any suitable source of air or fluid having a temperature less than the cooling medium B, such as from another system of the aircraft for example, is also contemplated herein. Further, in an embodiment, the medium C may be the same, or alternatively, may originate from the same source as the medium A. In an embodiment, the condenser may be thermally coupled to another cooling system or fluid loop of the aircraft. In an embodiment, the condenser may be thermally coupled to another component of the environmental control system 20.

The hot liquid cooling medium B at the outlet of the condenser 44 is then provided to the expansion device 56. Within the expansion device 56, pressure is removed from the liquid cooling medium B, causing at least a portion of the cooling medium B to change state from a higher pressure liquid to a lower pressure vapor without adding heat thereto. In the illustrated, non-limiting embodiment, the cooling medium B output from the expansion device 56 is a liquid and vapor mixture. From the expansion device 56, the refrigerant is provided to the inlet of the turbine. Within the turbine 46, work is extracted from the cooling medium B, resulting in a reduction in pressure and temperature of the cooling medium B. This work is used to drive the compressor 42 which is operably coupled to the turbine via the shaft 52. In an embodiment, the cooling medium B output from the turbine 46 is a two-phase fluid. However, embodiments where the cooling medium B at the outlet of the turbine 46 is a single phase are also within the scope of the disclosure.

From the turbine 46, the cooling medium B is provided to the evaporator 48. In the illustrated, non-limiting embodiment, within the evaporator 48, the cooling medium B is arranged in a heat exchange relationship with the medium A of the ECS 20. Accordingly, heat from the medium A is transferred to the cooling medium B, such that the substantial entirety of the cooling medium B at the outlet of the evaporator 48 is a vapor. Although the evaporator 48 is illustrated as having a counterflow configuration, it should be understood that embodiments where the evaporator has a parallel flow configuration or a cross-flow configuration are also contemplated herein.

In an embodiment, best shown in FIG. 3, the fluid cooling system 40 does not include a separate expansion device 56. In the illustrated, non-limiting embodiment, the turbine 46 is a variable nozzle area turbine. As is known, a turbine 46 generally includes a nozzle, illustrated schematically at 58, operable to accelerate a medium provided thereto for entry into a turbine impeller (not shown). Unlike the fluid cooling system of FIG. 2, where the nozzle of the turbine 46 has a fixed or constant diameter, in embodiments where the turbine 46 is a variable nozzle area turbine, the area of the nozzle of the turbine is variable. By adjusting the area, the capacity of the turbine 46 can be adapted to achieve a flow at the outlet of the turbine 46 having at least one desired parameter or property, such as phase, pressure, and/or temperature for example. For example, the cooling medium B provided to the turbine 46 may be a liquid and the cooling medium B expelled from the turbine 46 may be a two phase mixture of liquid and vapor cooling medium B.

With reference now to FIG. 4, the turbine 46 and the compressor 42 are mechanically separate components. Accordingly, a motor 54 is operably coupled to the compressor 42, such as via a shaft 52a for example. The motor is configured to provide the power necessary to rotate the compressor 42 and compress the cooling medium B therein.

Alternatively, or in addition, in an embodiment, the turbine 46 is part of a turbo-generator 60 including an electric generator 62 coupled to and driven by the turbine 46. Although a single shaft 52b is illustrated as extending between the turbine 46 and the generator 62 in the FIG., it should be understood that embodiments where the turbine 46 is mounted to a first shaft and the generator 62 is mounted to a second shaft are also contemplated herein. In such embodiments, the first shaft may be directly or indirectly coupled to the second shaft. Rotation of the turbine 46, driven by the flow of cooling medium B drives rotation of the generator shaft. Accordingly, rotation of the turbine 46 extracts energy from the cooling medium B and converts it into electrical energy via the generator 62. The energy created at the generator 62 may be stored, or alternatively, may be sent to an aircraft bus (not shown) where it is then supplied to one or more electrical loads of the aircraft.

In an embodiment, at least one parameter of the turbo-generator 60 may be varied to achieve a desired reduction in not only pressure, but also temperature of the cooling medium B. For example, if the temperature of the cooling medium B requires cooling, the current flow or load of the generator 62 may be increased causing the generator 62 to develop more input torque. The increased torque will result in slower rotation of the turbine 46 causing more energy to be extracted from the cooling medium B before exiting from an outlet of the turbine 46. Alternatively, or in addition, the turbine 46 may include a variable area nozzle 58, or may include a fixed nozzle and an expansion device 56 arranged either upstream or downstream therefrom along the fluid flow path of the fluid cooling system 40.

A fluid cooling system 40 as described herein has improved performance compared to existing systems. Further, by thermally coupling the fluid cooling system with the environmental control system 20, the cooling capacity is also increased. By using a turbine to extract power in the VCS, the effective coefficient of performance (COP) and performance benchmark of the system may be increased.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fluid cooling system for an aircraft comprising:
a compressor (42), a condenser (44), a turbine (46), and an evaporator (48) fluidly coupled to form a closed loop through which a cooling medium circulates, wherein the turbine includes a nozzle (58) operable to accelerate a flow of the cooling medium into the turbine and an area of an opening defined by the nozzle is variable;
wherein the evaporator is configured such that, in use, within the evaporator, the cooling medium is arranged in thermal communication with a medium of an environmental control system of the aircraft; and
wherein the diameter of the opening is adjusted to control at least one parameter of the cooling medium at an outlet of the turbine.

2. The fluid cooling system of claim 1, wherein the at least one parameter is at least one of a phase, pressure, and temperature of the cooling medium at the outlet of the turbine.

3. The fluid cooling system of any preceding claim, further comprising:
a shaft operably coupling the turbine and the compressor, wherein work extracted from the cooling medium within the turbine rotates the shaft to power the compressor.

4. The fluid cooling system of any preceding claim, further comprising a generator (62) operably coupled to the compressor by a shaft (52a), wherein work extracted from the cooling medium within the turbine generates electric power at the generator.

5. The fluid cooling system of any preceding claim, wherein the cooling medium is refrigerant.

6. The fluid cooling system of any preceding claim, further comprising a motor (54) operably coupled to the compressor.

## Patentansprüche

1. Fluidkühlsystem für ein Luftfahrzeug, umfassend:
einen Kompressor (42), einen Kondensator (44), eine Turbine (46) und einen Verdampfer (48), die fluidisch gekoppelt sind, um einen geschlossenen Kreislauf zu bilden, durch den ein Kühlmedium zirkuliert, wobei die Turbine eine Düse (58) beinhaltet, die betreibbar ist, um einen Fluss des Kühlmediums in die Turbine zu beschleunigen, und wobei eine Fläche einer durch die Düse definierten Öffnung variabel ist;
wobei der Verdampfer derart konfiguriert ist, dass im Betrieb das Kühlmedium innerhalb des Verdampfers in thermischer Verbindung mit einem Medium eines Klimaregelungssystems des Luftfahrzeugs angeordnet ist; und
wobei der Durchmesser der Öffnung eingestellt wird, um mindestens einen Parameter des Kühlmediums an einem Auslass der Turbine zu steuern.

2. Fluidkühlsystem nach Anspruch 1, wobei der mindestens eine Parameter mindestens eines von einer Phase, einem Druck und einer Temperatur des Kühlmediums an dem Auslass der Turbine ist.

3. Fluidkühlsystem nach einem der vorhergehenden Ansprüche, ferner umfassend:
eine Welle, welche die Turbine und den Kompressor betriebsmäßig koppelt, wobei die aus dem Kühlmedium innerhalb der Turbine gewonnene Leistung die Welle dreht, um den Kompressor anzutreiben.

4. Fluidkühlsystem nach einem der vorhergehenden Ansprüche, ferner umfassend einen Generator (62), der durch eine Welle (52a) betriebsmäßig an den Kompressor gekoppelt ist, wobei die aus dem Kühlmedium innerhalb der Turbine gewonnene Leistung elektrische Energie an dem Generator erzeugt.

5. Fluidkühlsystem nach einem der vorhergehenden Ansprüche, wobei das Kühlmedium ein Kältemittel ist.

6. Fluidkühlsystem nach einem der vorhergehenden Ansprüche, ferner umfassend einen Motor (54), der betriebsmäßig an den Kompressor gekoppelt ist.

## Revendications

1. Système de refroidissement de fluide pour un aéronef comprenant :
un compresseur (42), un condenseur (44), une turbine (46) et un évaporateur (48) couplés fluidiquement de façon à former une boucle fermée à travers laquelle circule un agent de refroidissement, dans lequel la turbine comprend une buse (58) pouvant être utilisée pour accélérer l'écoulement de l'agent de refroidissement dans la turbine et une surface de l'ouverture définie par la buse est variable ;
dans lequel l'évaporateur est configuré de telle sorte que, lors de l'utilisation, à l'intérieur de l'évaporateur, l'agent de refroidissement est disposé en communication thermique avec un agent d'un système de contrôle environnemental de l'aéronef ; et
dans lequel le diamètre de l'ouverture est réglé de façon à contrôler au moins un paramètre de l'agent de refroidissement au niveau d'une sortie de la turbine.

2. Système de refroidissement de fluide selon la revendication 1, dans lequel ledit ou lesdits paramètres contrôlés correspondent à au moins l'un des paramètres suivants parmi la phase, la pression et la température de l'agent de refroidissement au niveau d'une sortie de la turbine.

3. Système de refroidissement de fluide selon l'une quelconque des revendications précédentes, comprenant également :
un arbre couplant de manière opérationnelle la turbine et le compresseur, dans lequel le travail extrait de l'agent de refroidissement à l'intérieur de la turbine fait tourner l'arbre pour alimenter le compresseur.

4. Système de refroidissement de fluide selon l'une quelconque des revendications précédentes, comprenant également un générateur (62) couplé de manière opérationnelle au compresseur par un arbre (52a), dans lequel le travail extrait de l'agent de refroidissement à l'intérieur de la turbine génère de l'énergie électrique au niveau du générateur.

5. Système de refroidissement de fluide selon l'une quelconque des revendications précédentes, dans lequel l'agent de refroidissement est un réfrigérant.

6. Système de refroidissement de fluide selon l'une quelconque des revendications précédentes, comprenant également un moteur (54) couplé de manière opérationnelle au compresseur.
